# DEMANDE DE BREVET EUROPEEN

(11) **EP 0 621 473 A1**
(43) Date de publication de la demande: **26.10.1994**
(21) Numéro de dépôt: 94400796.2
(22) Date de dépôt: 13.04.1994
(51) Int. Cl.: G01N 1/12, C21C 5/46

(54) **Dispositif de prélèvement d'échantillon de métal en fusion, en particulier de fonte**

(30) Priorité: 20.04.1993 FR 9304626
(71) Demandeur: SOLED INDUSTRIES, F-57300 Mondelange (FR)
(72) Inventeur: Dulac, Laurent, F-57140 Woippy (FR)
(74) Mandataire: Michardière, Bernard

(57) **Abrégé**

Le dispositif (1) de prélèvement d'échantillon de métal en fusion, en particulier de fonte, comprend des moyens de support allongés (2) pour la manipulation du dispositif, et des moyens de prélèvement (P) montés à une extrémité des moyens de support et destinés à être immergés momentanément dans un bain de métal en fusion puis à en être retirés. Ces moyens de prélèvement (P) comprennent un moule (4) présentant une tranche (9) et comportant un logement (6) qui communique avec l'extérieur par un canal (7), ce moule (4) étant entouré d'un enrobage (19) en matériau granulaire, en particulier du genre sable de fonderie, dont les grains sont maintenus entre eux par un liant. Le canal (7) est entièrement limité par des parois du moule (4) et débouche, à l'extérieur, par une ouverture (8) située sur la tranche (9) du moule. La tranche (9) du moule comportant l'ouverture (8) est libre de tout enrobage et affleure ou dépasse la surface extérieure de l'enrobage (19).

## Description

L'invention est relative un dispositif de prélèvement d'échantillon de métal en fusion, en particulier de fonte, du genre de ceux qui comprennent des moyens de support allongés pour la manipulation du dispositif, et des moyens de prélèvement montés à une extrémité des moyens de support et destinés à être immergés momentanément dans un bain de métal en fusion puis à en être retirés, ces moyens de prélèvement comprenant un moule présentant une tranche et comportant un logement qui communique avec l'extérieur par un canal, ce moule étant entouré d'un enrobage en matériau granulaire, en particulier du genre sable de fonderie, dont les grains sont maintenus entre eux par un liant.

Un tel dispositif convient, en particulier pour le prélèvement de fonte liquide dans les rigoles de hauts fourneaux, dans les wagons torpilles, dans les poches droites ou dans tout autre type de contenant.

FR-A-2 555 745 et EP-A-0 002 716 montrent des dispositifs de ce type permettant d'effectuer dans des conditions relativement satisfaisantes les prélèvements d'échantillons.

Toutefois, des problèmes subsistent dus notamment à la pollution de l'échantillon par des grains de l'enrobage, notamment des grains de silice. En effet, lorsque le dispositif de prélèvement est plongé dans le métal en fusion, en particulier dans la fonte, l'enrobage est partiellement détruit, notamment en raison de la fusion du liant des grains de silice. Une partie de ces grains peut être entraînée par le métal liquide dans le moule, de sorte que les analyses effectuées sur l'échantillon ne seront pas totalement exacte, notamment au niveau du dosage du silicium.

Un problème analogue se pose lorsque le canal faisant communiquer le moule avec l'extérieur comporte un tube en quartz (ou autre matière polluante) qui, lors de l'écoulement du métal liquide, est érodé et libère un peu de matière qui va se mélanger avec l'échantillon et altérer sa composition.

Un des buts de l'invention est de fournir un dispositif de prélèvement d'échantillon dans lequel la pollution de l'échantillon, notamment par la matière de l'enrobage du moule, soit sensiblement diminuée ou même supprimée.

L'invention a également pour but de fournir un dispositif de prélèvement permettant un démoulage facile et rapide de l'échantillon solidifié après l'opération de prélèvement.

Selon l'invention, un dispositif de prélèvement d'échantillon de métal en fusion, en particulier de fonte, du genre défini précédemment, est caractérisé par le fait que le canal est entièrement limité par des parois du moule et débouche, à l'extérieur, par une ouverture située sur la tranche du moule et que la tranche du moule comportant cette ouverture est libre de tout enrobage et se trouve au moins au niveau de la surface extérieure de l'enrobage.

De préférence, la tranche du moule sur laquelle débouche le canal est légèrement en saillie par rapport à la surface de l'enrobage.

Ainsi, on élimine pratiquement toute pollution qui pourrait être occasionnée par le détachement de grains de l'enrobage lors du prélèvement.

De préférence, le moule est en céramique. En particulier le moule peut comprendre au moins une plaque sensiblement parallélépipèdique rectangle en céramique, présentant une cavité la traversant de part en part et débouchant sur les grandes faces de la plaque, des contreplaques, en particulier en acier, étant prévues pour être appliquées contre les grandes faces de la céramique et pour fermer la cavité qui ne communiquera, avec l'extérieur, que par le canal prévu dans ladite plaque en céramique.

Avantageusement, la plaque en céramique présente une surépaisseur dans la zone du canal d'entrée de la cavité de sorte que des épaulements rectilignes sont formés sur les deux grandes faces de la plaque en céramique, ces épaulements étant sensiblement orthogonaux à l'axe du canal d'entrée et servant d'appui aux contreplaques de fermeture, notamment de forme rectangulaire, dont un bord vient en butée contre l'épaulement correspondant.

Le canal d'entrée du métal liquide dans la cavité du moule présente, de préférence, une zone rétrécie au niveau du débouché dans la cavité de telle sorte que l'appendice de métal solidifié, corespondant à ce canal, puisse être aisément séparé de l'échantillon en forme de médaille correspondant à la cavité du moule.

Avantageusement, un canal auxiliaire, d'axe sensiblement parallèle au canal de remplissage du moule, est prévu, ce canal auxiliaire débouchant également sur la tranche du moule libre d'enrobage, ce canal auxiliaire ayant un diamètre inférieur au canal d'entrée du logement du moule et se raccordant à la cavité par un orifice de section réduite.

La plaque céramique et les contreplaques, notamment en acier, sont maintenues assemblées par une ceinture propre à être détruite par l'élévation de température qui se produit lors du prélèvement de métal, cette ceinture étant notamment constituée par un ruban adhésif, l'enrobage de matériau granulaire étant mis en place autour de cet ensemble.

Le plan moyen de la cavité peut passer par l'axe des moyens de support, tandis que la tranche du moule, libre de tout enrobage, a une grande dimension parallèle audit axe. Le canal d'entrée a son axe sensiblement perpendiculaire à l'axe des moyens de support et s'ouvre latéralement.

Les moyens de support allongés peuvent être constitués par un tube cylindrique en carton déshydraté, ou matière analogue, tandis que l'enrobage, de forme sensiblement cylindrique, comporte une queue destinée à s'engager à force à l'intérieur d'une extrémité du tube en carton déshydraté ; avantageusement, l'enrobage comporte, à la base de la queue, une rainure circulaire délimitée par un épaulement dans le matériau granulaire, de sorte que l'extrémité du tube en carton peut être engagée dans cette rainure et protégée par ledit épaulement.

L'invention consiste, mises à part les dispositions exposées ci-dessus, en un certain nombre d'autres dispositions dont il sera plus explicitement question ci-après à propos d'un exemple de réalisation particulier décrit avec référence au dessin ci-annexé, mais qui n'est nullement limitatif.

La figure 1 de ce dessin, est une vue en coupe suivant la ligne I-I, figure 2, avec partie arrachées, des moyens de prélèvement et d'une partie des moyens de support d'un dispositif de prélèvement d'échantillon conforme à l'invention.

La figure 2 est une vue de droite par rapport à la figure 1, avec parties arrachées.

La figure 3, enfin est une coupe suivant la ligne III-III, figure 1.

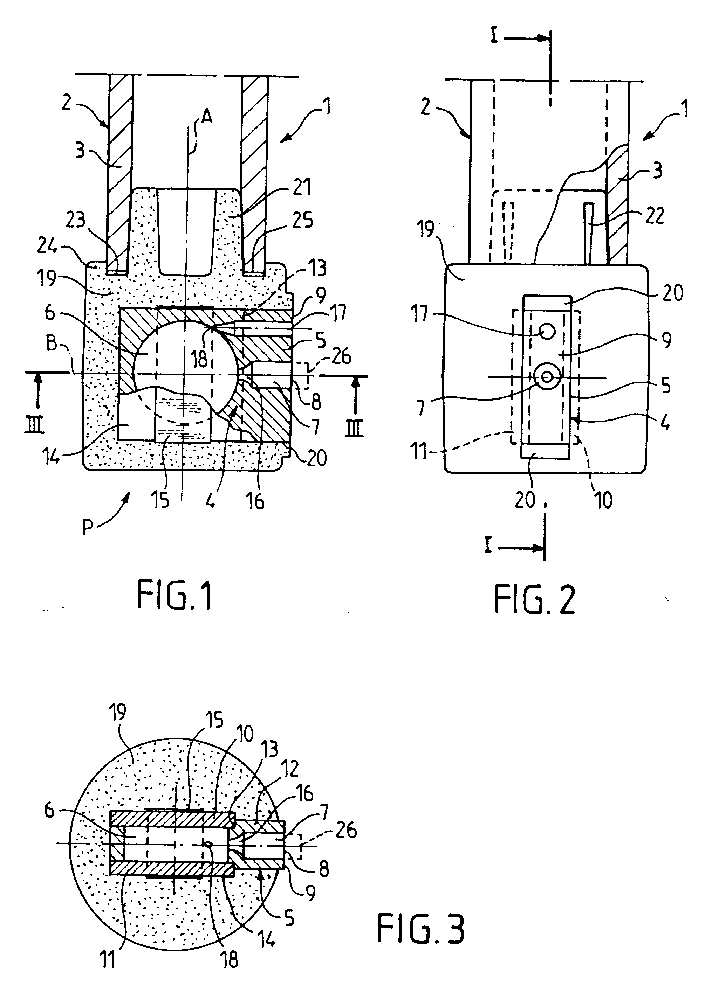

En se reportant à la figure 1 du dessin, on peut voir un dispositif 1 de prélèvement d'échantillon de métal en fusion, plus particulièrement de fonte liquide, comprenant des moyens de support 2, partiellement représentés, constitués par un tube cylindrique 3 en carton déshydraté, ou matière analogue. Le tube 3 est généralement destiné à être monté au bout d'une canne, non représentée, tenue par l'utilisateur chargé du prélèvement.

Des moyens de prélèvement P sont montés à l'extrémité inférieure du tube 3, ces moyens de prélèvement étant destinés à être immergés, momentanément, dans un bain de fonte liquide puis à en être retirés avec l'échantillon prélevé.

Les moyens de prélèvement P comprennent un moule ou réceptacle 4 avantageusement constitué par au moins une plaque 5 en céramique. La plaque 5 a une forme sensiblement parallélépipèdique rectangle présentant des grandes faces parallèles à l'axe A du tube 3. La plaque 5 comporte une cavité 6, en particulier à contour circulaire, la traversant de part en part et débouchant sur les grandes faces de cette plaque. Le plan moyen de la cavité 6 contient l'axe A. Le logement constitué par cette cavité 6 communique avec l'extérieur par un canal 7 transversal, c'est-à-dire dont l'axe B est orthogonal à l'axe A.

Le canal 7 est entièrement limité par des surfaces ou parois de la plaque céramique 5 et débouche latéralement, à l'extérieur, par une ouverture 8 située sur une tranche 9, verticale selon la représentation du dessin, de la plaque 5. Cette tranche 9 est constituée par une petite face plane rectangulaire de la plaque 5, la grande dimension de la tranche 9 étant parallèle à l'axe A.

La cavité 6 est fermée, comme visible sur la figure 3, par des contreplaques 10, 11 rectangulaires, en tôle d'acier suffisamment épaisse (épaisseur minimale de 5 mm), appliquées contre les faces correspondantes de la plaque céramique 5. Cette plaque en céramique 5 présente une surépaisseur dans la zone 12 du canal d'entrée 7, de sorte que des épaulements rectilignes 13, 14, parallèles à l'axe A, sont formés sur les deux grandes faces de la céramique. Un bord de chaque contreplaque 10, 11 vient en butée contre l'épaulement correspondant 13, 14.

La plaque céramique 5 et les contreplaques d'acier 10, 11 sont maintenues assemblées par une ceinture 15 en une matière propre à être détruite par l'élévation de la température au moment du prélèvement de l'échantillon. Cette ceinture 15 est notamment constituée par un ruban adhésif mis en place autour de l'ensemble.

Le canal d'entrée 7 présente une zone rétrécie 16 au niveau du débouché dans le logement ou cavité 6 de sorte que l'appendice de fonte solidifiée, correspondant à ce canal 7, puisse être aisément séparé, par rupture, de l'échantillon en forme de médaille correspondant à la cavité 6.

Un canal auxiliaire 17 de diamètre inférieur au canal d'entrée 7, peut être prévu avec un axe sensiblement parallèle à celui du canal 7 pour déboucher également sur la tranche 9 du moule. Le canal 17 se raccorde à la cavité 6 par un orifice 18 de section réduite.

L'ensemble de la plaque céramique 5, formant moule, et des contreplaques 10, 11 est entouré d'un enrobage 19 en matériau granulaire, en particulier en sable de fonderie dont les grains de silice sont agglomérés à l'aide d'un liant. L'enrobage 19 est généralement constitué par une pièce de forme en sable obtenue par un procédé habituel en fonderie. L'ensemble de l'enrobage 19, de la plaque céramique 5 et des contreplaques 10, 11 forme la cartouche du dispositif de prélèvement.

La tranche 9 de la plaque céramique ou au moins la zone de cette tranche 9 entourant l'ouverture 8, est libre de tout enrobage en matériau granulaire, et vient directement en contact avec la fonte en fusion lors de l'immersion. Cette tranche 9 se trouve au moins au niveau de la surface extérieure de l'enrobage, c'est-à-dire que la tranche 9 affleure cette surface ou déborde de cette surface. De préférence, comme visible sur la figure 2, la tranche 9 du moule est légèrement en saillie par rapport à la surface de l'enrobage 19, sensiblement cylindrique dans l'exemple considéré.

Cet enrobage 19 peut éventuellement comporter des bossages 20 au-dessus et au-dessous des petits côtés de la tranche 9, ces bossages venant affleurer le plan de la tranche 9.

L'enrobage 19 comporte une queue 21 dont la surface extérieure est légèrement tronconique, le diamètre extérieur de cette queue diminuant quand on s'éloigne de l'enrobage 19. Des nervures longitudinales 22 peuvent être prévues sur la surface extérieure pour le serrage dans le tube 3. A la base de la queue 21, l'enrobage 19 comporte une rainure circulaire 23 délimitée par un épaulement 24 dans le matériau granulaire. L'extrémité 25 du tube 3 en carton peut être engagée dans la rainure 23 et être ainsi protégée par l'épaulement 24.

Le trou de remplissage 8 est généralement protégé par une capsule fusible 26 en aluminium et/ou en acier et/ou en papier collant, empêchant les impuretés de pénétrer dans le moule lors de la traversée du laitier flottant sur le bain de fonte liquide.

Le prélèvement s'effectue de manière classique en plongeant la cartouche constituée par l'enrobage et le moule dans le bain de fonte liquide. Après fusion de la capsule 26, la fonte passe par le canal 7 et remplit la cavité 6. Le canal auxiliaire 17 est également rempli.

Le refroidissement de la fonte liquide est assuré par les deux contreplaques en acier 10, 11, permettant d'obtenir une bonne qualité de la surface de l'échantillon.

Le dispositif est retiré du bain de fonte et l'échantillon prélevé se solidifie dans la plaque céramique 5.

L'enrobage 19 peut alors être brisé et les contreplaques 10, 11 se séparent d'elles-mêmes de la plaque céramique 5, la ceinture 15 ayant été détruite par la chaleur lors du remplissage du moule.

L'échantillon en forme de disque correspondant à la cavité 6 se sépare de la plaque 5 par cassure des zones rétrécies qui le retiennent au niveau des zones 16 et 18.

La tige du canal auxiliaire 17 peut servir à l'analyse du carbone et du soufre par voie chimique.

La tranche 9 du moule formée par la plaque céramique 5 étant libre de tout enrobage 19 en matériau granulaire, et située à l'extérieur de cet enrobage 19, le prélèvement d'échantillon de fonte s'effectue sans qu'il y ait contact de la fonte liquide pénétrant dans le moule avec le sable de l'enrobage. Il n'y a donc pas de risque de pollution de l'échantillon par des grains de silice.

Aucun tube en quartz ou équivalent n'étant nécessaire pour canaliser le métal liquide vers le moule 6, les risques de pollution se trouvent également réduits à ce niveau.

Il est à noter que le tube en carton 2 peut être recouvert d'un manchon en fibre silico-alumineuse ou toute autre matière qui évite les projections pendant le prélèvement pour assurer la sécurité des opérateurs.

A titre indicatif, la cavité circulaire 6 peut avoir un diamètre de l'ordre de 35 mm, tandis que l'épaisseur du disque formant l'échantillon peut être de 6, 8, 10 ou 12 mm.

Il est à noter que la plaque céramique 5 pourrait déborder de l'enrobage 19 dans la zone diamétralement opposée à la tranche 9.

## Revendications

1. Dispositif de prélèvement d'échantillon de métal en fusion, en particulier de fonte, comprenant des moyens de support allongés (2) pour la manipulation du dispositif, et des moyens de prélèvement (P) montés à une extrémité des moyens de support et destinés à être immergés momentanément dans un bain de métal en fusion puis à en être retirés, ces moyens de prélèvement (P) comprenant un moule (4) présentant une tranche (9) et comportant un logement (6) qui communique avec l'extérieur par un canal (7), ce moule étant entouré d'un enrobage (19) en matériau granulaire, en particulier du genre sable de fonderie, dont les grains sont maintenus entre eux par un liant, caractérisé par le fait que le canal (7) est entièrement limité par des parois du moule (4) et débouche, à l'extérieur, par une ouverture (8) située sur la tranche (9) du moule, et la tranche (9) du moule comportant cette ouverture (8) est libre de tout enrobage et se trouve au moins au niveau de la surface extérieure de l'enrobage (19).

2. Dispositif selon la revendication 1, caractérisé par le fait que la tranche (9) du moule sur laquelle débouche le canal (7), est légèrement en saillie par rapport à la surface de l'enrobage (19).

3. Dispositif selon la revendication 1 ou 2, caractérisé par le fait que le moule (4) est en céramique.

4. Dispositif selon la revendication 3, caractérisé par le fait que le moule (4) comprend au moins une plaque (5) sensiblement parallélépipédique rectangle en céramique présentant une cavité (6) la traversant de part en part et débouchant sur les grandes faces de la plaque, des contreplaques (10, 11) en particulier en acier, étant prévues pour être appliquées contre les grandes faces de la céramique (5) et pour fermer la cavité (6) qui ne communiquera, avec l'extérieur, que par le canal (7) prévu dans ladite plaque en céramique (5).

5. Dispositif selon l'une des revendications précédentes, caractérisé par le fait que la plaque en céramique (5) présente une surépaisseur (12) dans la zone du canal d'entrée (7) de la cavité (6) de sorte que des épaulements rectilignes (13, 14) sont formés sur les deux grandes faces de la plaque (5) en céramique, ces épaulements (13, 14) étant sensiblement orthogonaux à l'axe du canal d'entrée (7) et servant d'appui aux contreplaques de fermeture (10, 11), dont un bord vient en butée contre l'épaulement correspondant.

6. Dispositif selon l'une des revendications précédentes, caractérisé par le fait que le canal d'entrée (7) du métal liquide dans la cavité (6) du moule présente une zone rétrécie (16) au niveau du débouché dans la cavité de telle sorte que l'appendice de métal solidifié, correspondant à ce canal (7), puisse être aisément séparé de l'échantillon en forme de médaille correspondant à la cavité (6) du moule.

7. Dispositif selon l'une quelconque des revendications précédentes, caractérisé par le fait qu'un canal auxiliaire (17), d'axe sensiblement parallèle au canal (7) d'entrée du moule, est prévu, ce canal (17) débouchant également sur la tranche (9) du moule libre d'enrobage, ce canal auxiliaire ayant un diamètre inférieur au canal d'entrée (7) et se raccordant à la cavité (6) par un orifice (18) de section réduite.

8. Dispositif selon l'une quelconque des revendications précédentes, caractérisé par le fait que la plaque céramique (5) et les contreplaques (10, 11) sont maintenues assemblées par une ceinture (15) propre à être détruite par l'élévation de température qui se produit lors du prélèvement de métal.

9. Dispositif selon l'une quelconque des revendications précédentes, caractérisé par le fait que le plan moyen de la cavité (6) passe par l'axe (A) des moyens de support, tandis que la tranche (9) du moule, libre de tout enrobage, a une grande dimension parallèle audit axe.

10. Dispositif selon la revendication 9, caractérisé par le fait que le canal d'entrée (7) a son axe sensiblement perpendiculaire à l'axe (A) des moyens de support et s'ouvre latéralement.

11. Dispositif selon l'une quelconque des revendications précédentes dans lequel les moyens de support allongés sont constitués par un tube cylindrique (2) en carton déshydraté, ou matière analogue, tandis que l'enrobage (19), de forme sensiblement cylindrique, comporte une queue (21) destinée à s'engager à force à l'intérieur de l'extrémité du tube en carton, caractérisé par le fait que l'enrobage (19) comporte, à la base de la queue (21), une rainure circulaire (23) délimitée par un épaulement (24) dans le matériau granulaire, de sorte que l'extrémité (25) du tube en carton est engagée dans cette rainure (23) et est protégée par ledit épaulement (24).
